# EUROPEAN PATENT SPECIFICATION

(11) **EP 0 574 150 B1**
(45) Date of publication and mention of the grant of the patent: **22.07.1998**
(21) Application number: 93303938.0
(22) Date of filing: 20.05.1993
(51) Int. Cl.: B60K 28/16

(54) **Method of and apparatus for traction control**
Antriebssteuervorrichtung und -verfahren
Appareil et procédé de commande d'entraînement

(30) Priority: 06.06.1992 GB 9212098
(43) Date of publication of application: 15.12.1993
(73) Proprietor: LUCAS INDUSTRIES PUBLIC LIMITED COMPANY, Solihull, West Midlands B91 3TX (GB)
(72) Inventor: Howes, Michael John, Nr. Andover SP11 7RZ (GB)
(74) Representative: Bailey, Richard Alan

(56) References cited:
- EP-A- 0 182 020
- EP-A- 0 318 857
- EP-A- 0 434 059
- EP-A- 0 449 118
- WO-A-89/04263
- FR-A- 2 658 133

## Description

The present invention relates to a method of and apparatus for traction control.

Known traction controllers compare a measurement of wheel spin with a spin threshold and reduce the torque supplied to the wheels, generally by reducing the output supplied by an engine, to reduce the wheel spin to within predefined limits. Although such traction controllers generally work well, difficulties may be encountered in some conditions, for instance on snow or gravel. For example, the traction controller may keep reducing the power applied to the wheels of a vehicle when ascending a snow covered incline in an attempt to control the wheel spin, and this may result in the vehicle coming to a halt. Once the vehicle has come to a halt, it may not be possible to restart the vehicle.

EP 0 449 118 discloses a traction control system which incorporates a rough road detector. Before traction control operates, the rough road detector detects whether the road is sufficiently rough to justify altering the traction control slip threshold. If so, steering angle is checked and, if less than a predetermined angle, vehicle speed is checked. If vehicle speed is less than a relatively high value (given as 80 kilometres per hour in the described example), the position of the accelerator pedal is checked. If more than fifty per cent towards its maximum position, the mode of vehicle operation is checked. If in a spot running mode when more importance is attached to acceleration performance than in a normal running mode, the spin threshold is increased. Otherwise, the spin threshold is not increased. Thus, the spin threshold is only increased when the vehicle is on a rough road, the steering angle is small, the vehicle speed is intermediate or low, the amount of accelerator depression is large and normal mode is selected. In other words, the spin threshold is only increased when there is no fear of adversely affecting vehicle stability and the driver wants better acceleration performance. The spin threshold is thus set for subsequent entry into traction control.

FR 2 658 133 discloses a traction control system which increases a slip threshold when lateral forces are present so as to reduce the sensitivity of the system. The susceptibility of a vehicle to instability is thus reduced during cornering or when other lateral forces are applied to the vehicle.

According to a first aspect of the invention there is provided a method as claimed in the appended Claim 1.

According to a second aspect of the invention, there is provided an apparatus as defined in the appended Claim 12.

Preferred embodiments of the invention are defined in the other appended claims.

The change in the spin threshold may be used to alter the performance of other vehicle systems such as an anti-lock brake system.

The invention will further be described, by way of example, with reference to the accompanying drawings, in which:
Figure 1 is a graph of the coefficient of friction versus wheel spin, plotted for a smooth surface and for a snow covered surface;
Figure 2 is a schematic diagram of a vehicle including a traction controller constituting an embodiment of the invention; and
Figure 3 is a flow diagram illustrating operation of the embodiment of Figure 2.

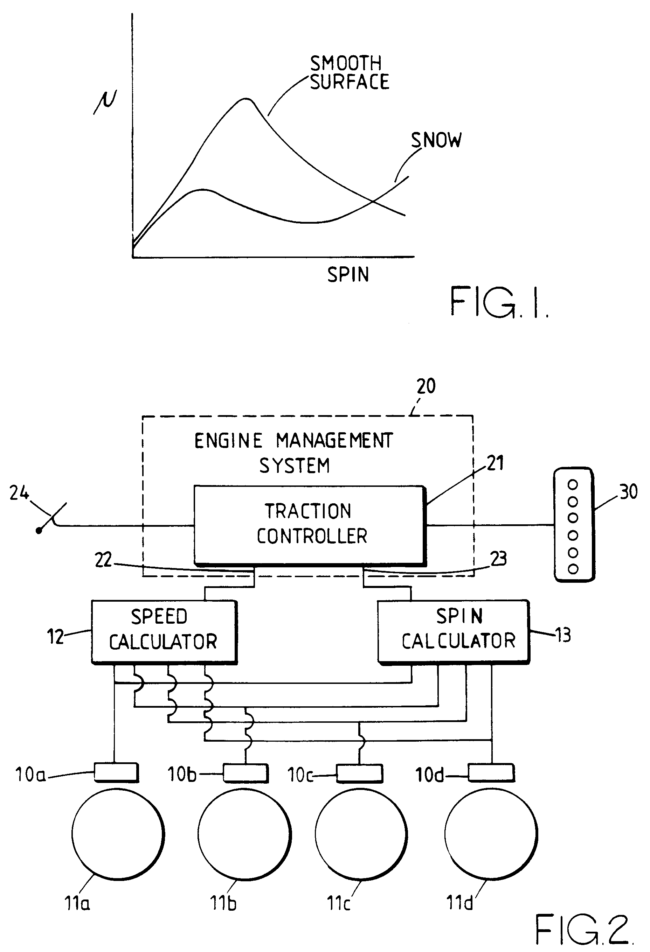

As illustrated in Figure 1, the coefficient of friction of a snow covered surface, and similarly on a gravel surface, can exhibit a secondary increase with increasing wheel spin. This is unlike the behaviour of a smooth (low friction) surface, where the coefficient of friction increases for small amounts of wheel spin and then decreases as the amount of wheel spin further increases.

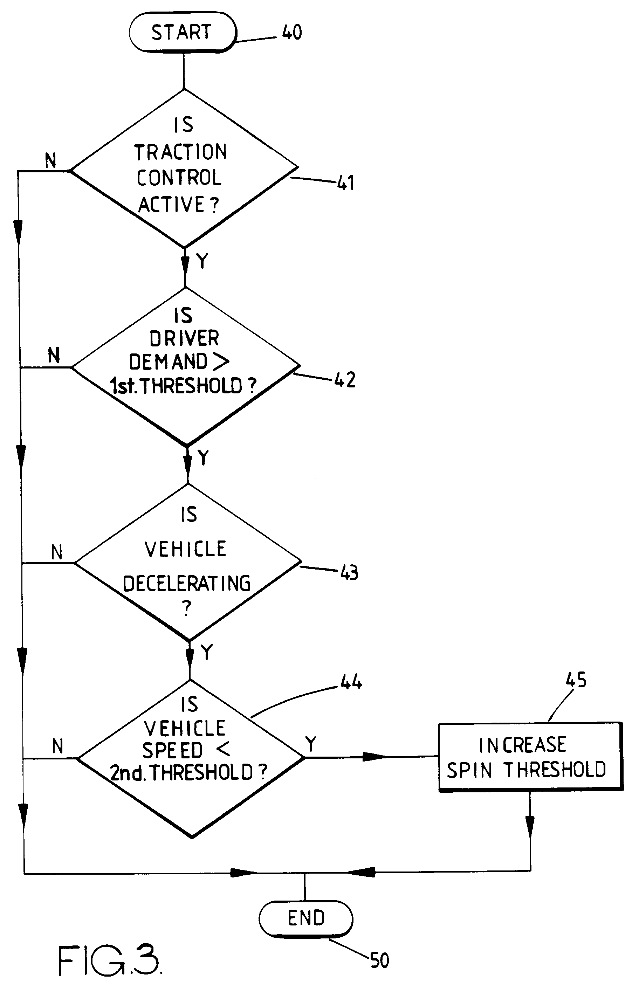

The traction control system of Figure 2 has first to fourth speed sensors 10a to 10d for measuring the speeds of wheels 11a to 11d, respectively. The speed sensors are connected to respective inputs of a speed calculator 12 and respective inputs of a spin calculator 13. A traction controller 21 forming part of an engine management system 20 has a speed input 22 connected to receive a measurement of vehicle speed from the speed calculator 12. An output of the spin calculator 13 is connected to a spin input 23 of the traction controller 21. A driver demand signal is supplied from an accelerator pedal transducer 24 to a demand input of the traction controller 21. An output of the traction controller supplies an engine demand to actuators (not shown) for controlling an engine 30, for instance by operating a throttle of the engine 30. The traction controller is embodied as a programmable data processor. Where the engine management system 20 comprises a programmed data processor, traction control may be performed by the addition of software controlling the processor.

The system of Figure 2 may be used with vehicles having four driven wheels. The spin calculator 12 may be arranged to calculate the vehicle speed as the speed of the slowest wheel or as an average of the speeds of two or more of the wheels. The spin calculator calculates spin with respect to the vehicle speed. Alternatively, If the vehicle only has two driven wheels, for example if wheels 11a and 11b are driven wheels, 11c and 11d being undriven, then the spin calculator may be arranged to calculate spin by comparing the speeds of the driven wheels 11a and 11b with the slowest undriven wheel speed or an average of the undriven wheel speeds. The speed calculator may then calculate the vehicle speed as an average of the undriven wheel speeds.

The traction controller 21 continuously monitors the wheel spin, and does not reduce the engine demand while the spin remains less than the spin threshold.

When wheel spin exceeds the spin threshold the traction controller 21 reduces the engine demand in accordance with a predetermined strategy to reduce the amount of wheel spin to a target value, which may be equal to or different from the spin threshold. However, the traction controller is arranged to modify the spin threshold under certain conditions.

Figure 3 is a flow diagram illustrating a procedure forming part of a program for controlling operation of a traction control system. The procedure is entered at step 40. The status of the traction controller is checked at step 41 to determine if the traction controller 21 is actively performing traction control. This may be by checking a predetermined signal or a word within a memory, or alternatively by comparing the driver demand and the engine demand. Control is passed to step 50, where the procedure is exited if the traction controller is not performing traction control.

If the traction controller 21 is performing traction control, control is passed to step 42 where the driver demand is compared with a first threshold. Control is passed to step 43 if the driver demand is greater than the first threshold, otherwise control is passed to step 50. The first threshold corresponds to a predetermined accelerator pedal position, for example greater than half maximum demand.

The rate of change of vehicle speed is checked at step 43. If the vehicle is decelerating, control is passed to step 44, otherwise control is passed to step 50. The vehicle speed is compared with a second threshold at step 44. The second threshold corresponds to a relatively modest vehicle speed, for example 30 Kmh⁻¹. If the vehicle speed is less than the second threshold, control is passed to step 45 where the spin threshold is increased. Control is passed to step 50 if the vehicle speed is equal to or greater than the second threshold. From step 45 control is then passed to step 50, where the procedure is exited.

The spin threshold increasing step, step 45, may include a check to see if the threshold has already been increased from its initial value. The spin threshold may then be maintained at its increased value, or increased still further. The spin threshold is reset once traction control is ceased or when the vehicle speed exceeds the second threshold.

Step 43, in which the rate of change of speed of the vehicle is checked to determine if the vehicle is decelerating, may be omitted. The procedure may then pass directly from step 42 to step 44.

It is thus possible to provide a traction controller that can exploit the observed increase in friction available from a snow covered surface as the wheel spin increases to maintain drive to the wheels. Because the changes to the spin threshold are not made unless the driver demand is relatively large, normal operation of the traction controller will not be altered unless the driver requests a large amount of the engine's power.

## Claims

1. A method of traction control for a vehicle, comprising controlling an engine demand signal so as to prevent wheel spin from substantially exceeding a spin threshold and increasing the spin threshold when: traction control is reducing vehicle drive; and the driver demand exceeds a first threshold; and the vehicle speed is less than a second threshold.

2. A method as claimed in Claim 1, characterised in that the first threshold corresponds to an accelerator pedal being depressed more than half way from a minimum demand position towards a maximum demand position.

3. A method as claimed in Claim 1 or 2, characterised in that the second threshold is substantially 30 Kmh⁻¹.

4. A method as claimed in any one of the preceding claims, characterised in that the spin threshold is not increased unless the vehicle is decelerating.

5. A method as claimed in any one of the preceding claims, characterised in that the spin threshold is increased abruptly to an increased spin threshold value.

6. A method as claimed in any one of Claims 1 to 4, characterised in that the spin threshold is increased smoothly to an increased spin threshold value.

7. A method as claimed in any one of the preceding claims, characterised in that the spin threshold is smoothly returned from an increased value to an unincreased value when the vehicle speed exceeds the second threshold.

8. A method as claimed in any one of the preceding claims, characterised in that the spin threshold is returned from an increased value to an unincreased value when traction control intervention ceases.

9. A method as claimed in Claim 5 or 6 when dependent on Claim 4, characterised in that the spin threshold is further increased if the vehicle continues to decelerate.

10. A method as claimed in Claim 4 or 9, or any one of Claims 5 to 8 when dependent on Claim 4, characterised in that deceleration is measured by comparing a measurement of vehicle speed with a preceding measurement of vehicle speed.

11. A method as claimed in Claim 4 or 9, or any one of Claims 5 to 8 when dependent on Claim 4, characterised in that deceleration is indicated by a continuing reduction in engine demand over a preceding time interval.

12. A traction controller for a vehicle, comprising a first comparator for comparing a driver demand with a first threshold, a second comparator for comparing a speed of the vehicle with a second threshold, and increasing means for increasing a traction control spin threshold, characterised by indicating means for indicating when traction control is reducing vehicle drive and characterised in that the increasing means is arranged to increase the spin threshold when: traction control is reducing vehicle drive by controlling an engine demand signal so as to prevent wheel spin from substantially exceeding the spin threshold; and the driver demand exceeds the first threshold; and the vehicle speed is less than the second threshold.

13. A traction controller as claimed in Claim 12, characterised by further comprising acceleration measuring means for measuring acceleration of the vehicle and inhibiting means for inhibiting the increasing means unless the vehicle is decelerating.

## Patentansprüche

1. Verfahren zur Traktionssteuerung für ein Fahrzeug, wobei bei diesem Verfahren ein Motoranforderungssignal so gesteuert wird, daß verhindert wird, daß die Raddrehzahl eine Drehzahlschwelle wesentlich übersteigt, und die Drehzahlschwelle erhöht wird, wenn: die Traktionssteuerung den Fahrzeugantrieb verringert; und die Fahreranforderung eine erste Schwelle übersteigt; und die Fahrzeuggeschwindigkeit niedriger als eine zweite Schwelle ist.

2. Verfahren gemäß Anspruch 1, dadurch gekennzeichnet, daß die erste Schwelle einem Durchtreten des Gaspedals um mehr als die Hälfte von einer minimalen Anforderungsposition bis zu einer maximalen Anforderungsposition entspricht.

3. Verfahren gemäß Anspruch 1 oder 2, dadurch gekennzeichnet, daß die zweite Schwelle im wesentlichen 30 kmh⁻¹ ist.

4. Verfahren gemäß irgendeinem der vorhergehenden Ansprüche, dadurch gekennzeichnet, daß die Drehzahlschwelle nur dann erhöht wird, wenn das Fahrzeug langsamer wird.

5. Verfahren gemäß irgendeinem der vorhergehenden Ansprüche, dadurch gekennzeichnet, daß die Drehzahlschwelle abrupt auf einen erhöhten Drehzahlschwellenwert erhöht wird.

6. Verfahren gemäß irgendeinem der Ansprüche 1 bis 4, dadurch gekennzeichnet, daß die Drehzahlschwelle allmählich auf einen erhöhten Drehzahlschwellenwert erhöht wird.

7. Verfahren gemäß irgendeinem der vorhergehenden Ansprüche, dadurch gekennzeichnet, daß die Drehzahl schwelle allmählich von einem erhöhten Wert auf einen nicht-erhöhten Wert zurückgeführt wird, wenn die Fahrzeuggeschwindigkeit die zweite Schwelle übersteigt.

8. Verfahren gemäß irgendeinem der vorhergehenden Ansprüche, dadurch gekennzeichnet, daß die Drehzahlschwelle von einem erhöhten Wert auf einen nicht-erhöhten Wert zurückgeführt wird, wenn die Intervention der Traktionssteuerung endet.

9. Verfahren gemäß Anspruch 5 oder 6, wenn von Anspruch 4 abhängig, dadurch gekennzeichnet, daß die Drehzahlschwelle weiter erhöht wird, wenn das Fahrzeug weiter verlangsamt wird.

10. Verfahren gemäß Anspruch 4 oder 9, oder irgendeinem der Ansprüche 5 bis 8, wenn von Anspruch 4 abhängig, dadurch gekennzeichnet, daß die Verlangsamung dadurch gemessen wird, daß eine Messung der Fahrzeuggeschwindigkeit mit einer vorhergehenden Messung der Fahrzeuggeschwindigkeit verglichen wird.

11. Verfahren gemäß Anspruch 4 oder 9, oder irgendeinem der Ansprüche 5 bis 8, wenn von Anspruch 4 abhängig, dadurch gekennzeichnet, daß die Verlangsamung durch eine fortdauernde Abnahme der Motoranforderung über ein vorhergehendes Zeitintervall angezeigt wird.

12. Traktionsregler für ein Fahrzeug, aufweisend einen ersten Komparator, um eine Fahreranforderung mit einer ersten Schwelle zu vergleichen, einen zweiten Komparator, um eine Geschwindigkeit des Fahrzeugs mit einer zweiten Schwelle zu vergleichen, und Erhöhungsmittel, um eine Traktionssteuerungs-Drehzahlschwelle zu erhöhen, gekennzeichnet durch Anzeigemittel, um anzuzeigen, wenn die Traktionssteuerung den Fahrzeugantrieb verringert, und dadurch gekennzeichnet, daß die Erhöhungsmittel so ausgelegt sind, daß sie die Drehzahlschwelle erhöhen, wenn: die Traktionssteuerung den Fahrzeugantrieb dadurch verringert, daß sie ein Motoranforderungssignal so steuert, daß verhindert wird, daß die Raddrehzahl die Drehzahlschwelle wesentlich übersteigt; und die Fahreranforderung die erste Schwelle übersteigt; und die Fahrzeuggeschwindigkeit niedriger als die zweite Schwelle ist.

13. Traktionsregler gemäß Anspruch 12, dadurch gekennzeichnet, daß er weiterhin Beschleunigungsmeßmittel aufweist, um die Beschleunigung des Fahrzeugs zu messen, und Sperrmittel aufweist, um die Erhöhungsmittel zu sperren, solange das Fahrzeug nicht langsamer wird.

## Revendications

1. Procédé de commande de traction pour un véhicule comprenant la commande d'un signal de demande du moteur, de sorte à empêcher qu'un patinage des roues ne dépasse sensiblement un seuil de patinage et pour accroître le seuil de patinage lorsque: la commande de traction réduit l'entraînement du véhicule; la demande du conducteur dépasse un premier seuil; la vitesse du véhicule est inférieure à un deuxième seuil.

2. Procédé selon la revendication 1, caractérisé en ce que le premier seuil correspond à un abaissement de la pédale d'accélération de plus de la moitié à partir d'une position de demande minimale vers une position de demande maximale.

3. Procédé selon les revendications 1 ou 2, caractérisé en ce que le deuxième seuil correspond pratiquement à 30 kmh⁻¹.

4. Procédé selon l'une quelconque des revendications précédentes, caractérisé en ce que le seuil de patinage n'est pas accru, sauf en cas de ralentissement du véhicule.

5. Procédé selon l'une quelconque des revendications précédentes, caractérisé en ce que le seuil de patinage est accru brusquement à une valeur de seuil de patinage accrue.

6. Procédé selon l'une quelconque des revendications 1 à 4, caractérisé en ce que le seuil de patinage est accru doucement à une valeur de seuil de patinage accrue.

7. Procédé selon l'une quelconque des revendications précédentes, caractérisé en ce que le seuil de patinage est réajusté doucement d'une valeur accrue à une valeur non accrue lorsque la vitesse du véhicule dépasse le deuxième seuil.

8. Procédé selon l'une quelconque des revendications précédentes, caractérisé en ce que le seuil de patinage est réajusté d'une valeur accrue à une valeur non accrue lorsque l'intervention de la commande de traction est arrêtée.

9. Procédé selon les revendications 5 ou 6, dépendant de la revendication 4, caractérisé en ce que le seuil de patinage est accru davantage lorsque le véhicule continue à ralentir.

10. Procédé selon les revendications 4 ou 9, ou selon l'une quelconque des revendications 5 à 8 dépendant de la revendication 4, caractérisé en ce que le ralentissement est mesuré en comparant une mesure de la vitesse du véhicule avec une mesure précédente de la vitesse du véhicule.

11. Procédé selon les revendications 4 ou 9, ou selon l'une quelconque des revendications 5 à 8 dépendant de la revendication 4, caractérisé en ce que le ralentissement est indiqué par une réduction continue de la demande du moteur pendant un intervalle de temps précédent.

12. Dispositif de commande de traction pour un véhicule comprenant un premier comparateur pour comparer une demande du conducteur avec un premier seuil, un deuxième comparateur pour comparer une vitesse du véhicule avec un deuxième seuil, et un moyen d'accroissement pour accroître un seuil de patinage de la commande de traction, caractérisé par un moyen indicateur pour indiquer la réduction de l'entraînement du véhicule par la commande de traction, et caractérisé en ce que le moyen d'accroissement est conçu de sorte à accroître le seuil de patinage lorsque: la commande de traction réduit l'entraînement du véhicule en assurant la commande d'un signal de demande du moteur de sorte à empêcher que le patinage des roues ne dépasse sensiblement le seuil de patinage; la demande du conducteur dépasse le premier seuil; la vitesse du véhicule est inférieure au deuxième seuil.

13. Dispositif de commande de traction selon la revendication 12, caractérisé en ce qu'il comprend en outre un moyen de mesure de l'accélération, pour mesurer l'accélération du véhicule, et un moyen inhibiteur pour inhiber le moyen d'accroissement, sauf en cas de ralentissement du véhicule.
